# FASCICULE DE BREVET EUROPEEN

(11) **EP 3 382 242 B1**
(45) Date de publication et mention de la délivrance du brevet: **09.10.2019**
(21) Numéro de dépôt: 18160644.3
(22) Date de dépôt: 08.03.2018
(51) Int. Cl.: F16J 15/3288, F01D 11/00

(54) **JOINT À BROSSE POUR ROTOR DE TURBOMACHINE**
BÜRSTENDICHTUNG FÜR ROTOR EINER TURBOMASCHINE
BRUSH SEAL FOR A TURBINE ENGINE ROTOR

(30) Priorité: 31.03.2017 BE 201705222
(43) Date de publication de la demande: 03.10.2018
(73) Titulaire: Safran Aero Boosters SA, 4041 Herstal (BE)
(72) Inventeur: HIERNAUX, Stéphane, 4680 Oupeye (BE); HABOTTE, Nicolas, 4350 Pousset (BE)
(74) Mandataire: Lecomte & Partners

(56) Documents cités:
- EP-A1- 2 843 196
- WO-A1-2007/028353
- US-A1- 2012 251 303

## Description

### Domaine technique

L'invention concerne un joint à brosse monté sur rotor de turbomachine. L'invention traite également à une turbomachine axiale, notamment un turboréacteur d'avion ou un turbopropulseur d'aéronef.

### Technique antérieure

Lors de son fonctionnement, le rotor d'une turbomachine suit des mouvements axiaux et radiaux important. Son axe de rotation peut basculer par rapport à l'axe de la turbomachine. Afin de s'adapter à ces déplacements tout en préservant l'étanchéité, il est connu d'employer des joints à brosse dont la souplesse permet de s'accommoder de ces mouvement. Un gain substantiel peut être garanti dans le contexte d'un turboréacteur subissant une ingestion ou une perte d'aube de soufflante.

Le document US2012251303 A1 divulgue une turbomachine dont le rotor coopère de manière étanche avec le stator grâce à un joint à brosse. Ce dernier comporte des poils, ou soies, qui sont inclinés par rapport à la direction radiale et par rapport à la direction axiale de la turbomachine. Les poils sont maintenus par une plaque tronconique et coopèrent avec une surface annulaire interne du stator. Toutefois, l'étanchéité dynamique assurée par le présent dispositif d'étanchéité reste limité.

Le document EP 2843196 A1 divulgue un dispositif d'étanchéité et un procédé d'assemblage d'un dispositif d'étanchéité de turbomachine selon les préambules des revendications 1 et 14 respectivement.

### Résumé de l'invention

### Problème technique

L'invention a pour objectif de résoudre au moins un des problèmes posés par l'art antérieur. Plus précisément, l'invention a pour objectif d'améliorer l'étanchéité d'un joint à brosse de turbomachine. L'invention a également pour objectif de simplifier l'assemblage d'un dispositif d'étanchéité. L'invention a également pour objectif de proposer une solution simple, résistante, légère, économique, fiable, facile à produire, commode d'entretien, d'inspection aisée, et améliorant le rendement.

### Solution technique

L'invention a pour objet un dispositif d'étanchéité de turbomachine, notamment de compresseur de turbomachine, le dispositif comprenant: une virole statorique destinée à être fixée aux extrémités radiales d'aubes statoriques ; un rotor avec un joint à brosse disposé à l'intérieur de la virole; remarquable en ce que la virole comprend une surface interne tronconique dont le profil est sensiblement incliné par rapport aux poils du joint à brosse de manière à assurer une étanchéité avec ledit joint à brosse.

Selon des modes avantageux de l'invention, le dispositif peut comprendre une ou plusieurs des caractéristiques suivantes, prises isolément ou selon toutes les combinaisons techniques possibles :

Le profil de la surface interne tronconique est sensiblement tangent aux poils du joint à brosse.

Les poils du joint à brosse s'étendent principalement axialement, éventuellement les poils du joint à brosse sont configurés de manière à pouvoir être plaqués par la force centrifuge contre la surface tronconique.

Les poils du joint à brosse comprennent des parties libres faisant saillie par rapport au rotor, la surface tronconique coopérant avec lesdites parties libres.

Les poils du joint à brosse s'étendent axialement sur au moins : 5%, ou 10%, de la longueur axiale L de la virole.

La conicité de la surface tronconique est comprise entre : 0,1% et 10%, ou entre 2% et 5%.

Le rotor comprend un support et aux moins deux rangées annulaires d'aubes rotoriques entre lesquelles est placée le joint à brosse, le support et les aux moins deux rangées annulaires d'aubes formant un ensemble monobloc.

Le rotor comprend une portion de fixation du joint qui est plus épaisse radialement que la portion de la virole placée en regard.

La virole comprend un amincissement en direction du joint à brosse, ledit amincissement étant éventuellement plus mince que la portion du rotor disposée axialement en regard.

La virole comprend un tronçon axial central avec une surépaisseur circulaire.

La virole est une virole interne; préférentiellement fixée aux extrémités internes des aubes statoriques.

Le rotor comprend une gorge annulaire ouverte axialement et dans laquelle est fixé un joint à brosse, notamment par goupille.

Le joint à brosse est un premier joint et la surface tronconique est une première surface tronconique ; le dispositif comprenant en outre un deuxième joint à brosse sur le rotor, et une deuxième surface tronconique intérieure qui est formée dans la virole et dont le profil est sensiblement incliné par rapport aux poils du deuxième joint à brosse de manière à assurer une étanchéité avec ledit deuxième joint.

Les poils du premier joint et du deuxième joint s'étendent majoritairement sur un même cône ou sur une même surface tubulaire.

La première surface tronconique et la deuxième surface tronconique présentent des conicités inversées.

La virole comprend une troisième surface reliant axialement la première surface tronconique à la deuxième surface tronconique, ladite troisième surface étant essentiellement tubulaire ou sensiblement tronconique.

Le dispositif comprend un carter externe autour de la virole, ledit carter étant formé de demi-coquilles, ou de plusieurs boucles fermées et fixées axialement les unes aux autres.

Les poils du premier joint sont orientés vers les poils du deuxième joint et inversement.

Au moins une ou chaque surface tronconique s'étend sur au moins : 10% ; ou 20% ; ou 30% ; 50% de la longueur axiale de la virole.

Au moins un ou chaque joint à brosse présente une épaisseur qui est supérieure ou égale à : 10% ; ou 20% ; ou 30% ; 50% de l'épaisseur radiale moyenne de la virole.

Les deux joints à brosse sont identiques.

Le diamètre maximal de la surface tronconique est supérieur au diamètre maximal du joint à brosse, ou au diamètre mesuré aux extrémités libres des poils.

La surface tronconique, notamment amont et/ou aval, présente un rayon augmentant vers son joint à brosse.

Le profil de la deuxième surface tronconique est sensiblement tangent aux poils du deuxième joint de manière à assurer une étanchéité.

Les aubes rotoriques sont rigidement liées au support.

Les caractéristiques présentées pour un seul joint à brosse sont applicables aux deux joints à brosse lorsque le dispositif en comprend plusieurs.

L'invention a également pour objet un dispositif d'étanchéité de turbomachine, le dispositif comprenant un rotor avec un joint à brosse dont les poils s'étendent principalement axialement ; une virole interne avec une surface interne tronconique qui coopère de manière étanche avec les poils joint à brosse.

L'invention a également pour objet un dispositif d'étanchéité de turbomachine, le dispositif comprenant un rotor avec un axe de rotation, un joint à brosse amont et un joint à brosse aval qui comprennent des poils s'étendant les uns vers les autres ou vers le joint voisin ; une virole interne avec au moins une surface annulaire interne inclinée par rapport à l'axe de rotation du rotor et qui coopère avec les joints à brosse afin d'assurer une étanchéité avec le rotor.

L'invention a également pour objet une turbomachine, notamment un turboréacteur, comprenant au moins un dispositif d'étanchéité, caractérisée en ce que le ou plusieurs ou chaque dispositif d'étanchéité est conforme à l'invention.

L'invention a également pour objet un procédé d'assemblage d'un dispositif d'étanchéité de turbomachine, le procédé comprenant les étapes suivantes : (a) fourniture ou réalisation d'une virole statorique ; (b) fourniture ou réalisation d'un rotor avec un joint à brosse avec des poils ; (c) introduction du rotor dans la virole ; remarquable en ce que la virole comprend une surface interne tronconique apte à coopérer de manière étanche avec le joint à brosse ; et en ce que lors de l'étape (c) introduction la surface tronconique pousse les poils du joint à brosse en cas de désalignement entre le rotor et la virole, le dispositif d'étanchéité étant éventuellement conforme à l'invention.

Selon un mode avantageux de l'invention, lors de l'étape (c) introduction, la surface tronconique pousse les poils radialement vers l'intérieur.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

L'invention permet d'améliorer l'étanchéité. En effet, chaque surface tronconique offre un tronçon incliné par rapport aux poils de joint, ce qui augmente l'épaisseur de virole pouvant intercepter ces poils en vue d'assurer une étanchéité. Le joint s'adapte mieux aux mouvements entre le rotor et le stator, tout comme aux vibrations. Aussi, le design des plateformes optimise l'intégration des joints à brosse, la légèreté, et la rigidité du rotor.

L'invention permet également de faciliter le montage du dispositif puisque la virole aide les joints à trouver leurs places. Les poils glissent contre leurs surfaces tronconiques en cas de désaxage rotor/stator. Le risque de pincer des poils, et éventuellement de les casser, est réduit. Ceci préserve l'intégrité du joint, améliore sa durabilité, et donc la sécurité de fonctionnement.

### Brève description des dessins

La figure 1 représente une turbomachine axiale selon l'invention.
La figure 2 est un schéma du compresseur basse pression de la figure 1.
La figure 3 illustre le dispositif d'étanchéité du compresseur de la figure 2.
La figure 4 est un agrandissement de la virole et de joints à brosse de la figure 3.
La figure 5 est un diagramme d'un procédé d'assemblage d'un dispositif d'étanchéité selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. La conicité est définie comme une variation de diamètre divisée par la longueur sur laquelle ladite variation de diamètre est mesurée.

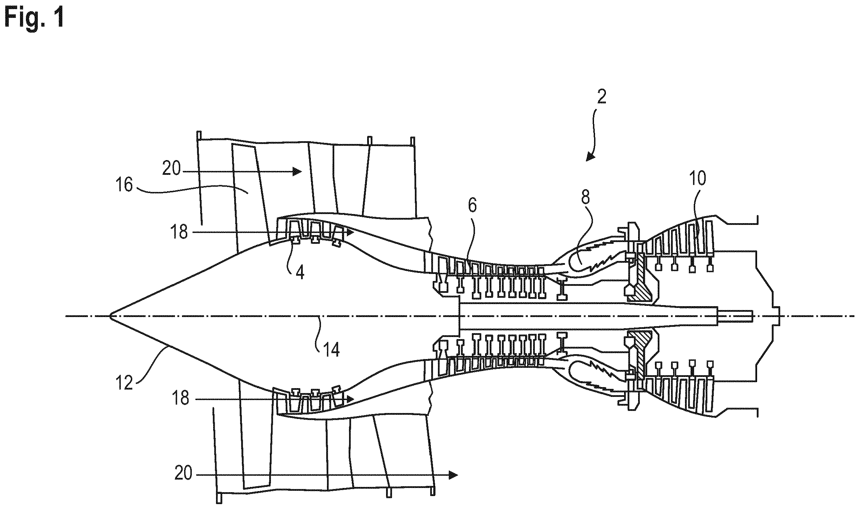

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée utile au vol d'un avion.

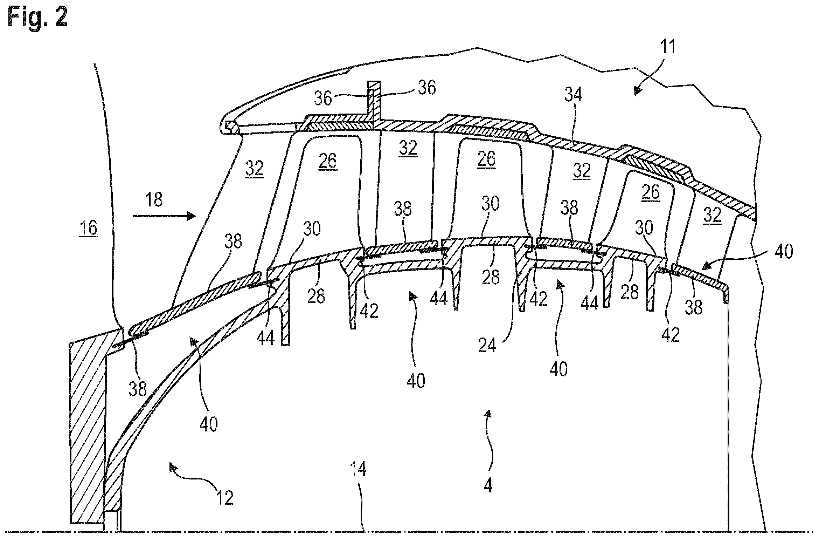

La figure 2 est une vue en coupe d'un compresseur d'une turbomachine axiale telle que celle de la figure 1. Le compresseur peut être le compresseur basse-pression 4.

Le rotor 12 peut comprendre un tambour 24 essentiellement creux. Il peut être réalisé en un métal tel du titane. Alternativement, le rotor 12 est formé de disques. Le rotor 12 comprend au moins une, préférentiellement plusieurs rangées d'aubes rotoriques 26, en l'occurrence trois. Les aubes 26 sont portées par le tambour 24 ou les disques. Le rotor 12 peut comprendre au moins une, préférentiellement plusieurs plateformes annulaires 28 qui sont chacune associée à une rangée d'aubes rotoriques 26. Les plateformes annulaires 28 peuvent être des supports de fixation d'où s'étendent radialement les aubes rotoriques 26. Les plateformes annulaires 28 comprennent des surfaces extérieures 30 guidant le flux annulaire primaire 18. Les aubes rotoriques 26 peuvent être soudées sur le tambour 24 de sorte à former un ensemble monobloc. Alternativement, les aubes rotoriques peuvent être usinées depuis un brut incluant les plateformes annulaires, ou être fixées par queues d'aronde introduites dans des gorges annulaires ménagées dans le rotor.

Le stator 11 du compresseur 4 comprend au moins un redresseur, préférentiellement plusieurs redresseurs, en l'occurrence quatre, qui contiennent chacun une rangée d'aubes statoriques 32. Les redresseurs sont associés au fan 16 ou à une rangée d'aubes rotoriques 26 pour redresser le flux d'air, de sorte à convertir la vitesse du flux en pression.

Les aubes statoriques 32 s'étendent essentiellement radialement depuis un carter extérieur 34 du stator 11. Les aubes statoriques 32 peuvent être soudées sur le carter extérieur 34, ou fixées à l'aide d'axes. Le carter extérieur 34 peut être formé de deux demi-coquilles fixées à l'aide de brides axiales. Le carter 34 peut être formé de segments axiaux en formes de boucles fermées. Ces boucles fermées sont fixées axialement les unes aux autres, par exemple via leurs brides annulaires radiales 36.

Le stator 11 comprend au moins une virole 38 associée à une rangée annulaire d'aubes statoriques 32, préférentiellement plusieurs viroles 38, chacune associée à une rangée annulaire d'aubes statoriques 32. Les viroles 38 peuvent être des viroles internes. Elles présentent généralement une forme de révolution avec un profil de révolution autour de l'axe 14. Les viroles 38 comme le carter externe 34 peuvent être réalisées en un ou plusieurs matériaux composites à matrice organique noyant un renfort fibreux. Ils peuvent également être métalliques, par avec un alliage de titane ou d'aluminium.

Le rotor 12 comprend au moins un, préférentiellement plusieurs dispositifs d'étanchéité 40 coopérant avec le stator 11. Chaque dispositif d'étanchéité 40 s'oppose à la circulation de fuites entre le tambour 24 et les viroles 38 ; notamment au niveau du jeu axial entre les plateformes annulaires 28 et les viroles 38.

Au moins un ou chaque dispositif d'étanchéité 40 comprend un joint à brosse, ou éventuellement deux joints à brosse, dont un premier joint à brosse 42 et un deuxième joint à brosse 44. Ceux-là peuvent correspondre à un joint à brosse amont 42 et à un joint à brosse aval 44 respectivement. Chaque joint à brosse est circulaire. Ces joints à brosses (42 ; 44) sont solidaires du rotor 12. Ils sont implantés sur le tambour 24 ou sur les disques. Ils peuvent être intégrés dans l'épaisseur radiale des plateformes annulaires 28. Un joint à brosse amont 42 peut être intégré dans le disque de la soufflante 16.

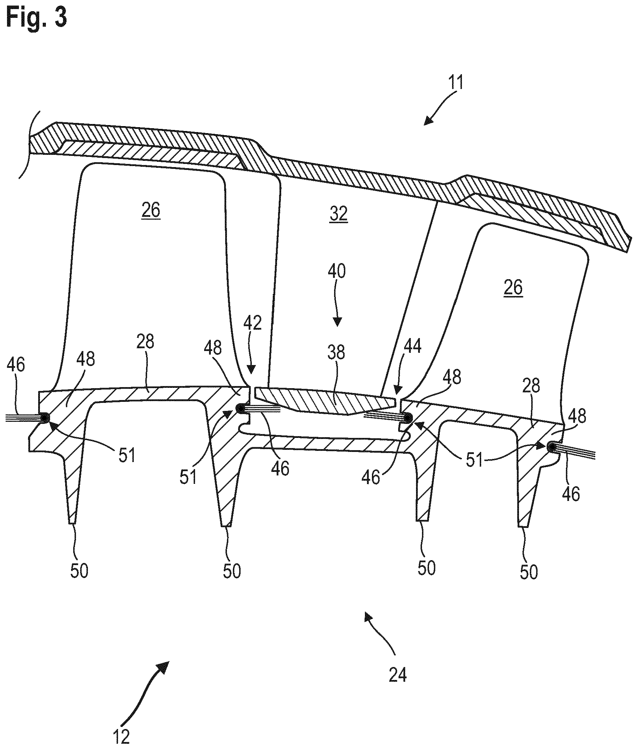

La figure 3 esquisse une portion de compresseur où apparait un dispositif d'étanchéité 40, par exemple un de ceux illustrés en figure 2.

Le dispositif d'étanchéité 40 est disposé entre deux rangées d'aubes rotoriques 26, et est associé à une rangée annulaire d'aubes statorique 32. Il est remarquable que les joints à brosse (42 ; 44) coopèrent de manière étanche avec la face annulaire interne de la virole 38.

Au moins un, préférentiellement chaque joint à brosse (42 ; 44) comprend une partie fixée dans la plateforme annulaire 28, et une partie libre. Chaque partie libre fait saillie, principalement axialement, par rapport à la plateforme annulaire 28, et est enveloppée par la virole 38. Lors du fonctionnement de la turbomachine, la force centrifuge pousse les parties libres des poils 46 vers l'extérieur ; c'est-à-dire contre la virole 38. Les poils 46 peuvent être réalisés en matériau organique, par exemple un polymère et présenter une diamètre inférieur à 2,00 mm, préférentiellement inférieur à 0,20 mm.

Le rotor 12 et/ou le stator 11 ; notamment leurs aubes (26 ; 32) ; peuvent être configurés manière à ce que le point de fonctionnement à température ambiante ou en vol de croisière soit à une vitesse de rotation supérieure ou égale à : 1000 tours/minute, ou 4000 tours/minute, ou 8000 tours/minute, ou 15000 tours/minute. A ces vitesses, chaque joint touche sa virole afin d'assurer une étanchéité. Au repos, ou en dessous du point de fonctionnement, les poils peuvent être à distance de la virole associée afin de conserver une marge de déplacement.

Chaque joint à brosse (42 ; 44) est intégré dans une des plateformes annulaires 28 du rotor 12, par exemple en extrémité amont et en extrémité aval. Les joint à brosse (42 ; 44) peuvent être disposés dans des portions de fixation 48 qui peuvent être des épaississements circulaires 48 des plateformes annulaires 28. Ces portions de fixation 48 peuvent former des bourrelets circulaires. Elles peuvent être dans le prolongement radial de raidisseurs internes 50 du rotor 12, notamment du tambour 24.

En complément, les plateformes annulaires 28 peuvent présenter des zones de moindres épaisseurs entre les joints à brosse (42 ; 44) ; et/ou entre les épaississements circulaires 48.

Au moins une ou chaque plateforme annulaire 28 peut comprendre une gorge annulaire 51 ouverte axialement vers la virole 38, ou deux gorges annulaires 51 orientées vers deux viroles (une seule étant représentée). Chaque joint peut comprendre un jonc rigide disposé dans gorge 51 correspondante, un goupille de fixation peut être associée à chaque joint pour l'imobiliser dans la gorge 51 correspondante.

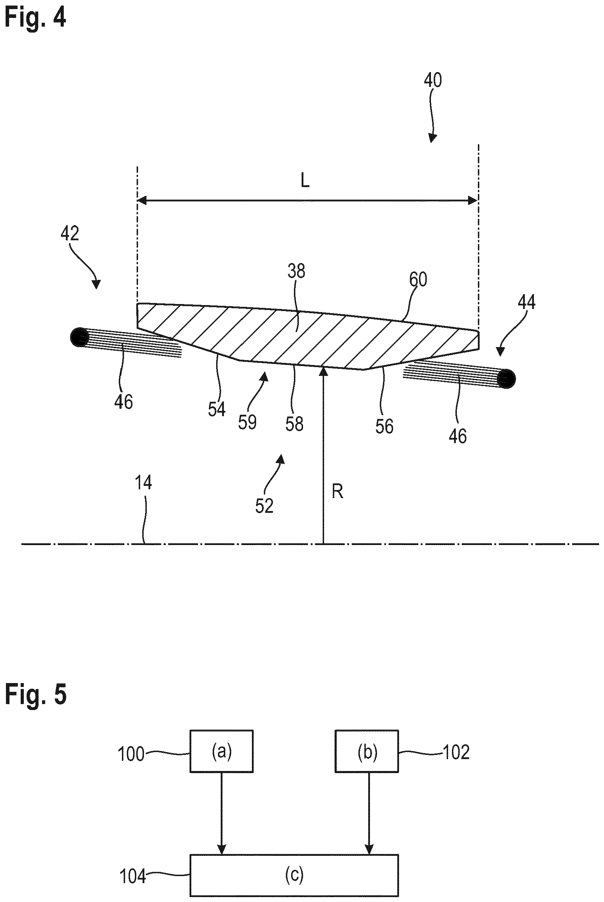

La figure 4 représente un dispositif d'étanchéité selon l'invention. Le dispositif 40 peut correspondre à ceux décrits en relation avec les figures 2 à 3.

La virole 38 peut présenter une épaisseur variable, et/ou un rayon interne R variable ; ledit rayon étant mesuré depuis l'axe de rotation 14. Le rayon interne R est mesuré contre la face annulaire interne 52 de la virole 38. Cette face interne 52 peut comprendre plusieurs tronçons présentant différentes variations axiales de rayon R. La face interne 52 peut comprendre au moins une surface tronconique ou au moins deux surfaces tronconiques, dont une première surface tronconique 54 et une deuxième surface tronconique 56. Par tronconique on peut entendre une surface généralement conique, et/ou qui est une base de cone. Les surfaces (54 ; 56) peuvent correspondre à une surface tronconique amont 54 et à une surface tronconique aval 56 respectivement. Ces surfaces sont des surfaces internes. Leurs conicités peuvent être comprises entre : 1% et 30%, ou 5% et 25%, ou entre 10% et 15% par exemple. Chaque surface tronconique présente un profil de révolution autour de l'axe de rotation 14, par exemple une droite, qui est incliné par rapport à l'axe 14. Lorsque la virole est en moitié amont du compresseur, la conicité amont est supérieure à la conicité aval. L'inverse peut s'observer en moitié aval du compresseur.

Ces surfaces (54 ; 56) peuvent être à distance l'une de l'autre, notamment axialement. A cet égard, elles peuvent être séparées par une troisième surface 58, qui peut former une jonction. La troisième surface 58 peut être essentiellement tubulaire, ou éventuellement sensiblement tronconique. Sa conicité est inférieure à celle de la surface amont 54 et de la surface aval 56. Elle peut être formée par un tronçon central 59 qui forme l'épaisseur maximale de la virole 38.

La virole 38 s'aminci axialement grâce aux surfaces tronconiques 54 et 56. L'épaisseur de la virole 38 peut diminuer vers ses extrémités axiales, notamment en raison de la présence des surfaces tronconiques (54 ; 56) qui impliquent une diminution de matière puisque la surface externe 60 montre une pente continue. La surface externe 60 peut être tubulaire ou tronconique. Chacune des surfaces 54 ; 56 ; 58 et 60 peut être sensiblement sphéroïdale, donc à double courbure, et non exclusivement tubulaire ou tronconique. Dans le présent exemple, la première et la deuxième surface tronconique présentent des conicités inverses car leurs rayons internes R augmentent dans des directions opposées, notamment vers l'extérieur de la virole, c'est à dire vers les joints (42 ; 44).

Les poils 46 s'étendent les uns vers les autres. Le joint amont 42 peut comprendre des poils 46 parallèles et/ou colinéaires avec des poils 46 du joint aval 44. Ils rentrent dans la virole 38, par exemple sur au moins 2% de sa longueur L. Ils peuvent s'étendre axialement sur au moins 5% de la surface tronconique associée.

La figure 5 est un diagramme du procédé d'assemblage d'un dispositif d'étanchéité selon l'invention. Le dispositif peut correspondre à ceux décrits en relation avec les figures 2 à 4.

Le procédé peut comprendre les étapes suivantes :
(a) fourniture ou réalisation 100 d'une virole statorique ;
(b) fourniture ou réalisation 102 d'un rotor avec un joint à brosse avec des poils;
(c) introduction 104 ou emmanchement du rotor dans la virole en logeant chaque joints dans sa surface tronconique d'étanchéité de virole.

Les étapes (a) et (b) fourniture ou réalisation 100 et 102 peuvent être effectuées simultanément.

Lors de l'étape (c) introduction 104, les poils sont poussés par leur surface tronconique en cas de désalignement, par exemple en cas de décalage ou d'inclinaison entre l'axe de symétrie de la virole et l'axe de rotation du rotor.

Lors de l'étape (c) introduction 104, la surface tronconique pousse les poils du joint à brosse, ou la première et la deuxième surface tronconique poussent les joints à brosse, par exemple radialement vers l'intérieur. Les poils sont rabattus vers l'axe de rotation. Le déplacement des poils de joints peut être progressif. En particulier, l'introduction des poils est guidée par les surfaces tronconiques, qui évitent de buter contre les extrémités de la virole. Ces surfaces limitent le risque de plier ou pincer les poils au montage.

En cas d'alignement, l'introduction peut être sans contact. Chaque surface tronconique reste à distance radialement de son joint.

## Revendications

1. Dispositif d'étanchéité (40) de turbomachine (2), le dispositif (40) comprenant :
- une virole statorique (38) destinée à être fixée aux extrémités radiales d'aubes statoriques (32) ;
- un rotor (12) avec un joint à brosse (42 ; 44) disposé à l'intérieur de la virole (38);
**caractérisé en ce que**
la virole (38) comprend une surface interne tronconique (54 ; 56) dont le profil est sensiblement incliné par rapport aux poils (46) du joint à brosse (42 ; 44) de manière à assurer une étanchéité avec ledit joint à brosse (42 ; 44).

2. Dispositif d'étanchéité (40) selon la revendication 1, **caractérisé en ce que** les poils (46) du joint à brosse (42 ; 44) s'étendent principalement axialement, éventuellement les poils (46) du joint à brosse (42 ; 44) sont configurés de manière à pouvoir être plaqués par la force centrifuge contre la surface tronconique (54 ; 56).

3. Dispositif d'étanchéité (40) selon l'une des revendications 1 à 2, **caractérisé en ce que** les poils (46) du joint à brosse (42 ; 44) comprennent des parties libres faisant saillie par rapport au rotor (12), la surface tronconique (54 ; 56) coopérant avec lesdites parties libres.

4. Dispositif d'étanchéité (40) selon l'une des revendications 1 à 3, **caractérisé en ce que** la conicité de la surface tronconique (54 ; 56) est comprise entre : 0,1% et 10%, ou entre 2% et 5%.

5. Dispositif d'étanchéité (40) selon l'une des revendications 1 à 4, **caractérisé en ce que** le rotor (12) comprend un support et aux moins deux rangées annulaires d'aubes rotoriques (26) entre lesquelles est placée le joint à brosse (42 ; 44), le support et les aux moins deux rangées annulaires d'aubes rotoriques (26) formant un ensemble monobloc.

6. Dispositif d'étanchéité (40) selon l'une des revendications 1 à 5, **caractérisé en ce que** la virole (38) comprend un amincissement en direction du joint à brosse (42 ; 44), ledit amincissement étant éventuellement plus mince que la portion du rotor (12) disposée axialement en regard.

7. Dispositif d'étanchéité (40) selon l'une des revendications 1 à 6, **caractérisé en ce que** la virole (38) comprend un tronçon axial central (59) avec une surépaisseur circulaire.

8. Dispositif d'étanchéité (40) selon l'une des revendications 1 à 7, **caractérisé en ce que** le rotor (12) comprend une gorge annulaire (51) ouverte axialement et dans laquelle est fixé un joint à brosse (42 ; 44), notamment par goupille.

9. Dispositif d'étanchéité (40) selon l'une des revendications 1 à 8, **caractérisé en ce que** la joint à brosse est un premier joint à brosse (42) et la surface tronconique est une première surface tronconique (54); le dispositif comprenant en outre un deuxième joint à brosse (44) sur le rotor (12), et une deuxième surface tronconique intérieure (56) qui est formée dans la virole (38) et dont le profil est sensiblement incliné par rapport aux poils (46) du deuxième joint à brosse (44) de manière à assurer une étanchéité avec ledit deuxième joint (44).

10. Dispositif d'étanchéité (40) selon la revendication 9, **caractérisé en ce que** les poils (46) du premier joint et du deuxième joint s'étendent majoritairement selon un même cône ou selon une même surface tubulaire.

11. Dispositif d'étanchéité (40) selon l'une des revendications 9 à 10, **caractérisé en ce que** la première surface tronconique (54) et la deuxième surface tronconique (56) présentent des conicités inversées.

12. Dispositif d'étanchéité (40) selon l'une des revendications 9 à 11, **caractérisé en ce que** la virole (38) comprend une troisième surface (58) reliant axialement la première surface tronconique (54) à la deuxième surface tronconique (56), ladite troisième surface (58) étant essentiellement tubulaire ou sensiblement tronconique.

13. Turbomachine (2), notamment un turboréacteur, comprenant au moins un dispositif d'étanchéité (40), **caractérisée en ce que** le ou chaque dispositif d'étanchéité (40) est conforme à l'une des revendications 1 à 12.

14. Procédé d'assemblage d'un dispositif d'étanchéité (40) de turbomachine (2), le procédé comprenant les étapes suivantes :
(a) fourniture ou réalisation (100) d'une virole statorique (38);
(b) fourniture ou réalisation (102) d'un rotor (12) avec un joint à brosse (42 ; 44) avec des poils (46);
(c) introduction (104) du rotor dans la virole (38);
**caractérisé en ce que** la virole (38) comprend une surface interne tronconique (54 ; 56) apte à coopérer de manière étanche avec le joint à brosse (42 ; 44) ;
et **en ce que** lors de l'étape (c) introduction (104) la surface tronconique (54 ; 56) pousse les poils (46) du joint à brosse (42 ; 44) en cas de désalignement entre le rotor (12) et la virole (38), le dispositif d'étanchéité (40) étant éventuellement conforme à l'une des revendications 1 à 12.

15. Procédé d'assemblage selon la revendication 14, **caractérisé en ce que** lors de l'étape (c) introduction (104), la surface tronconique (54 ; 56) pousse les poils (46) radialement vers l'intérieur.

## Patentansprüche

1. Dichtungsvorrichtung (40) für eine Turbomaschine (2), wobei die Vorrichtung umfasst:
- eine Statorummantelung (38), die dazu bestimmt ist, an den radialen Enden der Statorschaufeln (32) befestigt zu werden;
- einen Rotor (12) mit einer Bürstendichtung (42; 44), der im Inneren der Ummantelung (38) angeordnet ist;
**dadurch gekennzeichnet, dass**
die Ummantelung eine frustokonische Innenfläche (54; 56) umfasst, deren Profil in Bezug auf die Borsten (46) der Bürstendichtung (42; 44) spürbar geneigt ist, um so eine Abdichtung mit der besagten Bürstendichtung (42; 44) sicherzustellen.

2. Dichtungsvorrichtung (40) nach dem Anspruch 1, **dadurch gekennzeichnet, dass** sich die Borsten (46) der Bürstendichtung (42; 44) hauptsächlich axial erstrecken, wobei die Borsten (46) der Bürstendichtung (42; 44) möglicherweise so konfiguriert sind, dass sie durch die Zentrifugalkraft gegen die frustokonische Oberfläche (54; 56) angepresst werden.

3. Dichtungsvorrichtung (40) nach einem der Ansprüche 1 bis 2, **dadurch gekennzeichnet, dass** die Borsten (46) der Bürstendichtung (42; 44) freie Teile enthalten, die in Bezug auf den Rotor (12) herausstehen, wobei die frustokonische Oberfläche (54; 56) mit dem besagten freien Teilen zusammenwirkt.

4. Dichtungsvorrichtung (40) nach einem der Ansprüche 1 bis 3, **dadurch gekennzeichnet, dass** die Konizität der frustokonischen Oberfläche (54; 56) zwischen 0,1% und 10% oder zwischen 2% und 5% liegt.

5. Dichtungsvorrichtung (40) nach einem der Ansprüche 1 bis 4, **dadurch gekennzeichnet, dass** der Rotor (12) eine Unterstützung und mindestens zwei ringförmige Reihen von Rotorschaufeln (26) umfasst, zwischen denen die Bürstendichtung (42; 44) positioniert ist, wobei die Unterstützung und die mindestens zwei ringförmigen Reihen von Rotorschaufeln (26) eine einstückige Gesamtheit bilden.

6. Dichtungsvorrichtung (40) nach einem der Ansprüche 1 bis 5, **dadurch gekennzeichnet, dass** die Ummantelung (38) eine Verjüngung in Richtung der Bürstendichtung (42; 44) umfasst, wobei die besagte Verjüngung möglicherweise dünner ist als Teil des Rotors (12), der axial gegenüber angeordnet ist.

7. Dichtungsvorrichtung (40) nach einem der Ansprüche 1 bis 6, **dadurch gekennzeichnet, dass** die Ummantelung (38) einen axialen Zentralabschnitt (59) mit einer kreisförmigen Überdicke aufweist.

8. Dichtungsvorrichtung (40) nach einem der Ansprüche 1 bis 7, **dadurch gekennzeichnet, dass** der Rotor (12) eine axial offene Ringnut (51) umfasst und in der eine Bürstendichtung (42; 44) fixiert ist, insbesondere durch einen Stift.

9. Dichtungsvorrichtung (40) nach einem der Ansprüche 1 bis 8, **dadurch gekennzeichnet, dass** die Bürstendichtung eine erste Bürstendichtung (42) und die frustokonische Oberfläche eine erste frustokonische Oberfläche (54) ist; wobei die Vorrichtung weiter eine zweite Bürstendichtung (44) auf dem Rotor (12) und eine innere zweite frustokonische Oberfläche (56) umfasst, die in der Ummantelung (38) gebildet ist und deren Profil hinsichtlich der Borsten (46) der zweiten Bürstendichtung (44) spürbar geneigt ist, um mit der besagten zweiten Dichtung (44) eine Abdichtung sicherzustellen.

10. Dichtungsvorrichtung (40) nach Anspruch 9, **dadurch gekennzeichnet, dass** sich die Borsten (46) der ersten Dichtung und der zweiten Dichtung überwiegend gemäß einem gleichen Kegel oder gemäß einer gleichen rohrförmigen Oberfläche erstrecken.

11. Dichtungsvorrichtung (40) nach einem der Ansprüche 9 und 10, **dadurch gekennzeichnet, dass** die erste frustokonische Oberfläche (54) und die zweite frustokonische Oberfläche (56) entgegengesetzte Konizitäten haben.

12. Dichtungsvorrichtung (40) nach einem der Ansprüche 9 bis 11, **dadurch gekennzeichnet, dass** die Ummantelung (38) eine dritte Oberfläche (58) umfasst, die die erste frustokonische Oberfläche (54) axial mit der zweiten frustokonischen Oberfläche (56) verbindet, wobei die besagte dritte Oberfläche (58) im Wesentlichen rohrförmig oder im Wesentlichen kegelförmig ist.

13. Turbomaschine (2), insbesondere ein Strahltriebwerk, umfassend mindestens eine Dichtungsvorrichtung (40), **dadurch gekennzeichnet, dass** die oder jede Dichtungsvorrichtung (40) gemäß einem der Ansprüche 1 bis 12 ist.

14. Montageverfahren einer Dichtungsvorrichtung (40) einer Turbomaschine (2), wobei das Verfahren die folgenden Schritte umfasst:
a) Bereitstellung oder Herstellung (100) einer Statorummantelung (38);
b) Bereitstellung oder Herstellung (102) eines Rotors (12) mit einer Bürstendichtung (42; 44) mit Borsten (46);
c) Einführung (104) des Rotors in die Ummantelung (38);
**dadurch gekennzeichnet, dass** die Ummantelung (38) eine frustokonische Innenfläche (54; 56) aufweist, die in der Lage ist, dicht mit der Bürstendichtung (42; 44) zusammenzuwirken;
und dass während des Schrittes (c) der Einführung (104) die frustokonische Oberfläche (54; 56) die Borsten (46) der Bürstendichtung (42; 44) im Falle einer Fehlausrichtung zwischen den Rotor (12) und die Ummantelung (38) schiebt, wobei die Dichtungsvorrichtung (40) möglicherweise gemäß einem der Ansprüche 1 bis 12 ist.

15. Montageverfahren nach Anspruch 14, **dadurch gekennzeichnet, dass** während des Schrittes (c) der Einführung (104) die frustokonische Oberfläche (54; 56) die Borsten (46) radial nach innen schiebt.

## Claims

1. Sealing device (40) for a turbomachine (2), notably a turbomachine (2) compressor (4), the device (40) comprising:
- a stator shroud (38) intended to be fixed to the radial ends of stator blades (32);
- a rotor (12) with a brush seal (42; 44) arranged inside the shroud (38); **characterized in that**
the shroud (38) comprises a frustoconical internal surface (54; 56) the profile of which is substantially inclined with respect to the bristles (46) of the brush seal (42; 44) so as to seal with the said brush seal (42; 44).

2. Sealing device (40) according to one of Claims 1, **characterized in that** the bristles (46) of the brush seal (42; 44) extend mainly axially, possibly the bristles (46) of the brush seal (42; 44) are configured in such a way as to be able to be pressed by centrifugal force firmly against the frustoconical surface (54; 56).

3. Sealing device (40) according to one of Claims 1 to 2, **characterized in that** the bristles (46) of the brush seal (42; 44) comprise free parts projecting with respect to the rotor (12), the frustoconical surface (54; 56) collaborating with said free parts.

4. Sealing device (40) according to one of Claims 1 to 3, **characterized in that** the conicity of the frustoconical surface (54; 56) is comprised between: 0.1% and 10%, or between 2% and 5%.

5. Sealing device (40) according to one of Claims 1 to 4, **characterized in that** the rotor (12) comprises a support and at least two annular rows of rotor blades (26) between which the brush seal (42; 44) is positioned, the support and the at least two annular rows of rotor blades (26) forming a unit assembly.

6. Sealing device (40) according to one of Claims 1 to 5, **characterized in that** the shroud (38) comprises a thinning in the direction of the brush seal (42; 44), the said thinning possibly being thinner than the portion of the rotor (12) arranged axially facing it.

7. Sealing device (40) according to one of Claims 1 to 6, **characterized in that** the shroud (38) comprises a central axial section (59) with a circular overthickness.

8. Sealing device (40) according to one of Claims 1 to 7, **characterized in that** the rotor (12) comprises an annular groove (51) open axially and in which a brush seal (42; 44) is fixed, notably by pinning.

9. Sealing device (40) according to one of Claims 1 to 8, **characterized in that** the brush seal is a first brush seal (42) and the frustoconical surface is a first frustoconical surface (54); the device further comprising a second brush seal (44) on the rotor (12), and an interior second frustoconical surface (56) which is formed in the shroud (38) and the profile of which is substantially inclined with respect to the bristles (46) of the second brush seal (44) so as to seal with the said second seal (44).

10. Sealing device (40) according to Claim 9, **characterized in that** the bristles (46) of the first seal and of the second seal extend predominantly in the one same cone or in the one same tubular surface.

11. Sealing device (40) according to one of Claims 9 and 10, **characterized in that** the first frustoconical surface (54) and the second frustoconical surface (56) have opposite conicities.

12. Sealing device (40) according to one of Claims 9 to 11, **characterized in that** the shroud (38) comprises a third surface (58) axially connecting the first frustoconical surface (54) to the second frustoconical surface (56), the said third surface (58) being essentially tubular or substantially frustoconical.

13. Turbomachine (2), notably a turbojet, comprising at least one sealing device (40), **characterized in that** the or each sealing device (40) is in accordance with one of Claims 1 to 12.

14. Method of assembling a turbomachine (2) sealing device (40), the method comprising the following steps:
(a) supply or production (100) of a stator shroud (38);
(b) supply or production (102) of a rotor (12) with a brush seal (42; 44) with bristles (46);
(c) introduction (104) of the rotor into the shroud (38);
**characterized in that** the shroud (38) comprises a frustoconical internal surface (54; 56) able to collaborate in a sealed manner with the brush seal (42; 44);
and **in that**, during step (c) introduction (104), the frustoconical surface (54; 56) pushes the bristles (46) of the brush seal (42; 44) in the event of misalignment between the rotor (12) and the shroud (38), the sealing device (40) possibly being in accordance with one of Claims 1 to 12.

15. Assembly method according to Claim 14, **characterized in that** during step (c) introduction (104), the frustoconical surface (54 ; 56) pushes the bristles (46) radially inwards.
